# DEMANDE DE BREVET EUROPEEN

(11) **EP 1 935 716 A1**
(43) Date de publication de la demande: **25.06.2008**
(21) Numéro de dépôt: 07122816.7
(22) Date de dépôt: 11.12.2007
(51) Int. Cl.: B60Q 1/14

(54) **Procédé de discrimination automatique de zones lumineuses détectées par un dispositif d'aide à la conduite pour véhicule**

(30) Priorité: 21.12.2006 FR 0611228
(71) Demandeur: VALEO VISION, 93012 Bobigny (FR)
(72) Inventeur: Moizard, Julien, 75012 PARIS (FR); Rebut, Julien, 75010 PARIS (FR)

(57) **Abrégé**

La présente invention a pour objet de discriminer de véritables détections de véhicules adverses et de fausses détections, dues, pour un véhicule considéré, à la réflexion de ses propres faisceaux lumineux (105A ; 105B) sur des surfaces réfléchissantes. A cet effet, on propose, dans l'invention, d'émettre (201) un faisceau lumineux qui est pulsé, caractère pulsé se traduisant nécessairement par une interruption, très limitée dans le temps, du faisceau lumineux considéré. Une telle interruption se traduit par un clignotement des surfaces réfléchissantes éclairées par le faisceau lumineux considéré. On met alors en oeuvre des moyens de traitement d'images (102) pour repérer ce clignotement (204), et repérer (205) les zones de lumière correspondant aux surfaces réfléchissantes. Un tel repérage peut par exemple être utilisé pour ne pas prendre en compte (215) les zones de lumière correspondant aux surfaces réfléchissantes dans des opérations de commutation (210) des dispositifs projecteurs bi-fonctions (104).

## Description

### DOMAINE TECHNIQUE DE L'INVENTION

La présente invention a pour objet un procédé de discrimination automatique de zones lumineuses détectées par un dispositif d'aide à la conduite pour véhicule. Elle a également pour objet un dispositif apte à mettre en oeuvre un tel procédé. Par discrimination on désigne l'action qui consiste à différencier les éléments d'un ensemble au moyen d'un ou plusieurs critères afin de pouvoir appliquer un traitement spécifique à chaque sous-ensemble ainsi constitué.

L'invention a essentiellement pour but de proposer, au sein d'un véhicule, une solution permettant de distinguer de manière automatique les zones lumineuses correspondant à des feux de véhicules croisés ou suivis des zones lumineuses correspondant à une réflexion de faisceaux lumineux émis par le véhicule considéré.

Le domaine de l'invention est, d'une façon générale, celui des dispositifs d'aide à la conduite. De tels dispositifs sont destinés à augmenter le confort de pilotage pour un conducteur. Ils sont de nature très diverses, allant des systèmes de navigation aux systèmes de surveillance de l'environnement du véhicule. L'objet de la présente invention porte sur ce dernier point, et plus particulièrement sur la détection des véhicules adverses, croisés ou suivis, dans des conditions de circulation nocturne. La détection de tels véhicules peut être utilisée dans différentes applications, telles que l'ACC (de l'expression anglosaxonne Automatic Cruise Control) ou la commutation automatique de dispositifs projecteurs. La présente invention sera décrite plus particulièrement dans ce dernier type d'applications, sans pour autant limiter la portée de sa mise en oeuvre à cette seule application.

Dans les dispositifs d'aide à la conduite faisant intervenir une commutation automatique des dispositifs projecteurs, destinée à proposer le faisceau lumineux produit le mieux adapté en fonction du trafic rencontré, et plus précisément en fonction de la présence et/ou de la distance des véhicules adverses, un paramètre essentiel est la détermination précise des véhicules adverses. Un pilotage approprié des dispositifs projecteurs bifonctions permet la commutation automatique d'une fonction de feux de route vers une fonction de feux de croisement et inversement, en fonction de la détection d'une situation susceptible de générer un éblouissement pour le conducteur venant en sens inverse, ou, via les rétroviseurs, pour le conducteur du véhicule qui précède.

Pour des raisons de sécurité, il est important que les opérations de commutation de ces dispositifs bifonctions soient fiables; il est donc nécessaire d'interpréter correctement la nature des sources de lumière détectées par les différents capteurs intervenant. Or, il est délicat de s'assurer que des sources de lumière, présentes dans une scène de route, sont issues de projecteurs de véhicules croisés ou de feux de signalisation, et qu'il ne s'agit pas de fausses détections occasionnées par la réflexion de lumière sur des surfaces réfléchissantes telles que, par exemple des panneaux de signalisation. De telles détections erronées se traduisent par une dégradation notoire des performances de la commutation automatique des feux de route aux feux de croisement et inversement. En effet, en cas de mauvaise interprétation amenant à interpréter une réflexion de lumière comme un véhicule adverse, des commutations intempestives interviennent, limitant de manière inappropriée et surprenante la visibilité du conducteur.

Les panneaux de signalisation, les catadioptres et les poteaux de signalisation de virages sont des exemples de surfaces réfléchissantes pouvant perturber la fonction de commutation automatique d'un dispositif projecteur bifonctions d'un véhicule équipé d'un dispositif d'aide à la conduite.

### ARRIERE PLAN TECHNOLOGIQUE DE L'INVENTION

Dans l'état de la technique, il existe déjà des solutions avec des dispositifs d'aide à la conduite faisant intervenir une commutation automatique des dispositifs projecteurs bifonctions. Différents types de capteurs, par exemple des caméras, associés à des moyens de traitement, par exemple de traitement d'images dans le cas des caméras, interviennent dans de tels dispositifs.

Une première solution, basée sur l'analyse de trajectoires lumineuses permet d'identifier, avec une précision acceptable, les sources lumineuses de type éclairage urbain et, dans une moindre mesure, les véhicules croisés. Mais cette solution demeure entachée d'erreurs; en particulier quand les sources de lumière sont éloignées du véhicule considéré, par exemple quelques centaines de mètres, et présentent donc un faible déplacement dans les images capturées par les caméras. Or, c'est entre 600 et 1000 mètres qu'il est nécessaire de commuter le projecteur d'une fonction feux de route à une fonction feux de croisement afin d'éviter l'éblouissement du conducteur roulant en sens inverse. Dans le cas d'un véhicule suivi, le passage de la fonction feux de croisement à la fonction feux de route s'effectue au-delà d'environ 400 mètres.

Une deuxième solution consiste à utiliser des capteurs aptes à discerner les couleurs des lumières détectées dans la scène de route. On peut ainsi distinguer les lumières de différentes sources lumineuses: feux arrière, projecteurs ou réflexions de projecteurs sur des surfaces réfléchissantes telles que les panneaux de signalisation. Mais cette solution requiert l'utilisation de capteurs de couleur qui présentent des inconvénients ; ils comportent notamment des filtres susceptibles de vieillissement précoce. Ils sont en outre moins sensibles aux niveaux de gris que les capteurs noir et blanc, ce qui est gênant si on envisage de faire intervenir ces capteurs dans différentes applications, par exemple de type vision de nuit et/ou une fonction LDWS (en anglais "Lane Departure Warning Signal", en français "avertissement de sortie de voie involontaire"). Par ailleurs, la discrimination des surfaces réfléchissantes n'est pas, là non plus, satisfaisante.

Une troisième solution propose de discriminer, au moyen de capteurs "noir et blanc", les sources lumineuses en fonction de la distribution spatiale des niveaux d'intensité lumineuses dans des zones correspondant, dans les images capturées, à des sources de lumière. Mais cette méthode est basée sur des calculs successifs de niveau de similarité entre les distributions mesurées et une distribution prédéterminée. Outre la complexité, et donc la lenteur, des calculs intervenant, les imprécisions engendrées par ce procédé à longues distances représentent un danger potentiel pour les automobilistes, ce qui réduit considérablement, voire annule l'intérêt d'avoir un système de commutation automatique des fonctions d'éclairage d'un véhicule de type automobile.

### DESCRIPTION GENERALE DE L'INVENTION

L'objet de l'invention propose une solution aux problèmes qui viennent d'être exposés. La présente invention a pour objectif de discriminer de véritables détections de véhicules adverses et de fausses détections, dues, pour un véhicule considéré, à la réflexion de ses propres faisceaux lumineux sur des surfaces de type panneaux de signalisation, catadioptre, poteaux d'intersection...

A cet effet, on propose, dans l'invention, d'émettre un faisceau lumineux qui est pulsé, c'est-à-dire un faisceau lumineux produit par une source lumineuse n'émettant pas ledit faisceau de manière continue, ledit faisceau étant créé par une succession d'impulsions lumineuses, générées le plus souvent par un signal électrique modulé en fréquence alimentant la source lumineuse émettant ledit faisceau ;pendant un laps de temps court, entre chaque impulsion émise, dont la répétition est périodique, le faisceau lumineux n'est plus émis. Le caractère pulsé d'un faisceau lumineux se traduit ainsi nécessairement par une interruption, très limitée dans le temps, du faisceau lumineux considéré. Une telle interruption, qui est avantageusement invisible pour l'homme - soit par la fréquence de pulsation, parfois également désignée comme fréquence de modulation, choisie - soit par l'utilisation de rayons invisibles, par exemple infrarouge, se traduit par un clignotement, invisible pour l'oeil humain, des surfaces réfléchissantes éclairées par le faisceau lumineux considéré. On met alors en oeuvre des moyens de traitement d'images pour repérer ce clignotement, et repérer les zones de lumière correspondant aux surfaces réfléchissantes.

Dans un exemple particulier de mise en oeuvre, on exploite un tel repérage pour ne pas prendre en compte les zones de lumière correspondant aux surfaces réfléchissantes dans les opérations de commutation des dispositifs projecteurs bifonctions.

L'invention concerne donc essentiellement un procédé de discrimination automatique de zones lumineuses détectées par un système d'aide à la conduite embarqué au sein d'un véhicule, ledit procédé comportant notamment les étapes consistant à :
- capturer, au moyen d'une caméra embarquée au sein du véhicule, des images relatives à une scène de route se déroulant devant le véhicule ;
- déterminer un ensemble de zones lumineuses sur les images capturées ;
   caractérisé en ce qu'il comporte notamment les étapes supplémentaires consistant à :
- émettre, au moyen d'une source lumineuse du véhicule, un faisceau lumineux pulsé caractérisé par une fréquence de pulsation ;
- identifier (204), dans l'ensemble de zones lumineuses détectées, un premier sous-ensemble de zones lumineuses constitué des zones lumineuses créées par le faisceau lumineux pulsé, cette identification du premier sous-ensemble comportant les différentes opérations consistant à :
- distinguer (205), sur une première image capturée, un ensemble d'objets lumineux, chaque objet lumineux étant associé bijectivement à une zone lumineuse de l'ensemble de zones lumineuses déterminé ;
- analyser (206) l'évolution de chaque objet lumineux sur une pluralité d'images successives consécutives à la première image, en détectant une éventuelle disparition de l'objet lumineux considéré ;
- identifier (207) comme zone lumineuse créée par le faisceau pulsé chaque zone lumineuse de l'ensemble de zones lumineuses associée à un des objets lumineux dont une disparition a été détectée dans l'opération d'analyse
   Outre les caractéristiques principales qui viennent d'être mentionnées dans le paragraphe précédent, le procédé selon l'invention peut présenter une ou plusieurs caractéristiques supplémentaires parmi les suivantes :
- le faisceau lumineux pulsé correspond à un faisceau lumineux réalisant une fonction de type route ;
- le faisceau lumineux pulsé est un faisceau infrarouge;
- la caméra a une première fréquence d'acquisition, la fréquence de pulsation de la source lumineuse étant strictement inférieure à la fréquence d'acquisition de la caméra ;
- la fréquence de pulsation de la source lumineuse est un sous-multiple de la fréquence d'acquisition de la caméra ;
- la pluralité d'images successives et consécutives, sur laquelle est analysée l'évolution de chaque objet lumineux, est constituée d'un nombre maximal d'images égal à N+1, N étant le nombre entier immédiatement supérieur à la valeur de la fréquence de pulsation de la source lumineuse ;
- préalablement à l'opération consistant à identifier comme zone lumineuse créée par le faisceau pulsé chaque zone lumineuse de l'ensemble de zones lumineuses associée à un des objets lumineux dont une disparition a été déterminée dans l'opération d'analyse, le procédé comporte les opérations supplémentaires consistant à :
- comparer une fréquence de disparition des objets lumineux à la fréquence de pulsation de la source lumineuse pour établir, le cas échéant, un lien de cause à effet ;
- identifier comme zone lumineuse créée par le faisceau pulsé chaque zone lumineuse de l'ensemble de zones lumineuses associée à un des objets lumineux dont une disparition a été déterminée dans l'opération d'analyse uniquement si le lien de cause à effet a été établi ;
- préalablement à l'opération consistant à identifier comme zone lumineuse créée par le faisceau pulsé chaque zone lumineuse de l'ensemble de zones lumineuses associée à un des objets lumineux dont une disparition a été déterminée dans l'opération d'analyse uniquement si le lien de cause à effet a été établi, le procédé comporte les opérations supplémentaire consistant à :
- modifier la valeur de la fréquence de pulsation de la source lumineuse en adoptant une nouvelle valeur de fréquence de pulsation ;
- comparer une fréquence de disparition des objets lumineux à la nouvelle fréquence de pulsation de la source lumineuse pour établir, le cas échéant, un nouveau lien de cause à effet ;
- identifier comme zone lumineuse créée par le faisceau pulsé chaque zone lumineuse de l'ensemble de zones lumineuses associée à un des objets lumineux dont une disparition a été déterminée dans l'opération d'analyse uniquement si le nouveau lien de cause à effet a été établi ;

Toutes les caractéristiques supplémentaires du procédé selon l'invention, dans la mesure où elles ne s'excluent pas mutuellement, sont combinées selon toutes les possibilités d'association pour aboutir à différents exemples de mise en oeuvre de l'invention.

La présente invention se rapporte également à un dispositif d'aide à la conduite d'un véhicule apte à mettre en oeuvre le procédé selon l'une au moins des revendications précédentes, ledit dispositif comportant notamment :
- une caméra apte à capturer des images d'une scène de route se déroulant devant le véhicule ;
   caractérisé en ce qu'il comporte notamment :
   - une source lumineuse émettant un faisceau lumineux pulsé ;
   - une unité de traitement d'images pour discriminer, sur les images capturées, des zones lumineuses crées par la source lumineuse modulée en fréquence et des zones lumineuses non créées par la source lumineuse modulée en fréquence ;
   - pilotage du projecteur lumineux en fonction desdites informations.

Outre les caractéristiques principales qui viennent d'être mentionnées dans le paragraphe précédent, le dispositif selon l'invention peut présenter une ou plusieurs caractéristiques supplémentaires parmi les suivantes :
- le dispositif comporte :
   - un dispositif projecteur bifonctions apte à produire un faisceau lumineux de type route et un faisceau lumineux de type code ;
   - un dispositif de pilotage pour réaliser une commutation automatique du faisceau lumineux produit par le dispositif projecteur bifonctions indépendamment de la présence éventuelle des zones lumineuses créées par la source lumineuse modulée en fréquence ;
   - la source lumineuse contribue au moins partiellement à la production du faisceau lumineux de type route ;
   - la fréquence de pulsation de la source lumineuse est inférieure strictement à la fréquence d'acquisition de la caméra ;
   - la fréquence d'acquisition de la caméra est de trente Hertz, et la fréquence de pulsation de la source lumineuse est de quinze Hertz.

Toutes les caractéristiques supplémentaires du dispositif selon l'invention, dans la mesure où elles ne s'excluent pas mutuellement, sont combinées selon toutes les possibilités d'association pour aboutir à différents exemples de mise en oeuvre de l'invention.

La présente invention se rapporte également à un véhicule automobile caractérisé en ce qu'il comporte le dispositif d'aide à la conduite présentant les caractéristiques principales, et éventuellement une ou plusieurs caractéristiques supplémentaires précédemment énoncées.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- à la figure 1, une représentation schématique d'un dispositif d'aide à la conduite faisant intervenir un exemple de mise en oeuvre du procédé selon l'invention ;
- à la figure 2, un organigramme décrivant le procédé selon l'invention.

### DESCRIPTION DETAILLEE DES FORMES DE REALISATION PREFE-REES DE L'INVENTION

Les différents éléments apparaissant sur plusieurs figures auront gardé, sauf précision contraire, la même référence.

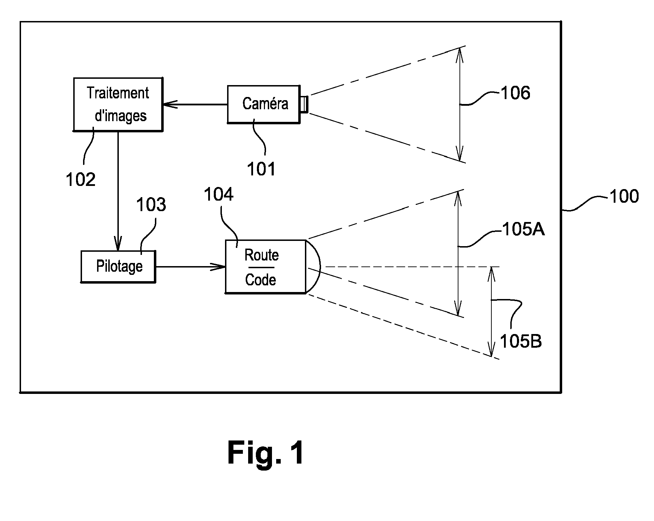

La figure 1 représente une vue d'ensemble d'un exemple de réalisation de dispositif d'aide à la conduite 100, du type de ceux réalisant une commutation automatique de dispositifs projecteurs bifonctions, embarqué au sein d'un véhicule de type automobile, approprié pour supporter un exemple de mise en oeuvre du procédé selon l'invention.

Dans cet exemple, le dispositif 100 discrimine automatiquement différents types de zones lumineuses détectées sur des images acquises au moyen d'une caméra pour piloter au moins un dispositif projecteur.

Sur la figure 1, le dispositif d'aide à la conduite 100 comporte :
- un dispositif projecteur bifonctions 104 apte à émettre un faisceau lumineux pulsé, par exemple au moyen d'une pluralité de diodes électroluminescentes, ou LEDs, correspondant à un faisceau lumineux de type route 105A et un faisceau lumineux de type code 105B ; dans d'autres exemples de réalisation, on utilise un dispositif de type illuminateur, émettant par exemple en infrarouge, comme source émettant un faisceau lumineux pulsé ;
- une caméra 101 apte à capturer des images d'une scène de route 106 se déroulant devant le véhicule ;
- une unité de traitement d'images 102 pour discriminer, sur les images capturées, des zones lumineuses crées par les faisceaux lumineux pulsés 105A et 105B et des zones lumineuses créées par des véhicules croisant ou suivis ;
- un dispositif de pilotage 103 pour réaliser une commutation automatique des faisceaux lumineux 105A et 105B émis par le dispositif projecteur bifonctions 104 indépendamment de la présence éventuelle des zones lumineuses créées par la réflexion desdits pulsés sur des surfaces réfléchissantes ;

L'unité de traitement d'images 102 est apte à :
- différencier un premier type de zones de lumière pulsée correspondant à des surfaces réfléchissant le premier faisceau 105A et/ou le deuxième faisceau 105B, d'un deuxième type de zones de lumière continue correspondant à des véhicules croisants ou suivis,
- rejeter le premier type de zones de lumière qui représentent des fausses détections de véhicules croisant ou suivis car elles sont issues du véhicule comportant le dispositif 100 selon l'invention,
- retenir le deuxième type de zones de lumière qui correspondent réellement à des détections de véhicules croisés ou suivis car elles en sont issue ;
- communiquer, au dispositif de pilotage 103, des informations sur le deuxième type de zones de lumière.

La commutation automatique réalisée par le dispositif de pilotage 103 consiste soit à passer du faisceau lumineux 105A vers le faisceau lumineux 105B, soit du faisceau lumineux 105B vers le faisceau lumineux 105A, en fonction de la présence ou l'absence des seules zones de lumière continue, c'est-à-dire ne provenant pas d'un faisceau pulsé, sur les images.

Pour différencier les vraies détections de véhicules croisés ou suivis des fausses détections desdits véhicules, la caméra 101 est réglée de façon à ce que le dispositif de traitement d'images 102 soit apte à identifier les faisceaux lumineux 105A et/ou 105B émis de manière pulsée. En effet, les réflexions des faisceaux pulsés 105A et 105B vont se traduire, sur les images de la scène de route 106 capturées par la caméra 101, par un clignotement régulier. Au contraire, un faisceau lumineux continu émis par un véhicule croisé ou suivi ne se traduit pas par un clignotement car il est présent sur toutes les images capturées par la caméra 101.

La discrimination des détections de véhicules croisés ou suivis présente deux cas de figure :
- lorsque le dispositif de traitement d'images 102 détecte un clignotement des images capturées par la caméra 101, qui correspondent en fait à la réflexion périodique des faisceaux lumineux pulsés 105A et/ou 105B, il rejette cette information et le dispositif de pilotage 103 du véhicule considéré ne réagit pas ;
- lorsque le dispositif de traitement d'images 102 ne détecte aucun clignotement des images capturées par la caméra101, c'est-à-dire qu'il ne détecte que la présence de faisceaux lumineux continus, il analyse cette information et le dispositif de pilotage 103 du véhicule peut alors faire basculer, en fonction de paramètres de type éloignement du véhicule adverse, le dispositif projecteur bifonctions 104 de la fonction de type route 105A à la fonction de type code 105B afin de ne pas éblouir les autres conducteurs.

Dans cet exemple de réalisation du système 100 selon l'invention, le dispositif projecteur bifonctions 104 émet dans les fréquences appartenant au spectre visible; il est alimenté par une tension présentant un rapport cyclique très élevé, par exemple de l'ordre de quatre vingt dix pourcents - c'est-à-dire que le faisceau lumineux est interrompu dix pourcents du temps total d'émission, réalisable notamment avec des LEDs, afin de ne pas diminuer la performance globale d'éclairage du véhicule considéré.

La valeur de la fréquence de pulsation est avantageusement un sous-multiple, par exemple 15 Hertz, de la fréquence d'acquisition d'images de la caméra 101, typiquement trente Hertz, ou 30 images par seconde. Par sous-multiple d'un nombre, on désigne une valeur obtenue par la division du nombre considéré par un entier naturel. Une fréquence de pulsation de 15 Hertz désigne le fait que le dispositif projecteur produisant le faisceau pulsé, émet quinze pulsations par seconde. En conséquence, une caméra dont la fréquence d'acquisition est de trente images par secondes capturera des images parmi lesquelles certaines ne distingueront pas le faisceau lumineux pulsé, les images en question étant capturées à des moments de transition entre deux impulsions consécutives.

D'une façon plus générale, on choisit comme fréquence de pulsation de la source lumineuse une fréquence inférieure à la fréquence d'acquisition des images par la caméra. On est ainsi certain d'obtenir un clignotement à un moment donné sur l'ensemble des images capturées. L'avantage du choix d'un sous-multiple comme fréquence de pulsation est d'être assuré d'observer ce clignotement, de façon très régulière, et sur un nombre restreint d'images consécutives. Dans l'exemple pris ici, le clignotement est observé toutes les deux images.

Avantageusement, la fréquence de pulsation utilisée est connue des calculateurs intervenant dans le module de traitement d'images 102. Une telle connaissance permet de s'affranchir du risque de mal interpréter des signaux issus de sources modulées extérieures, par exemple celles de véhicules équipés de certains dispositifs de vision de nuit ou d'un même dispositif de discrimination automatique 100.

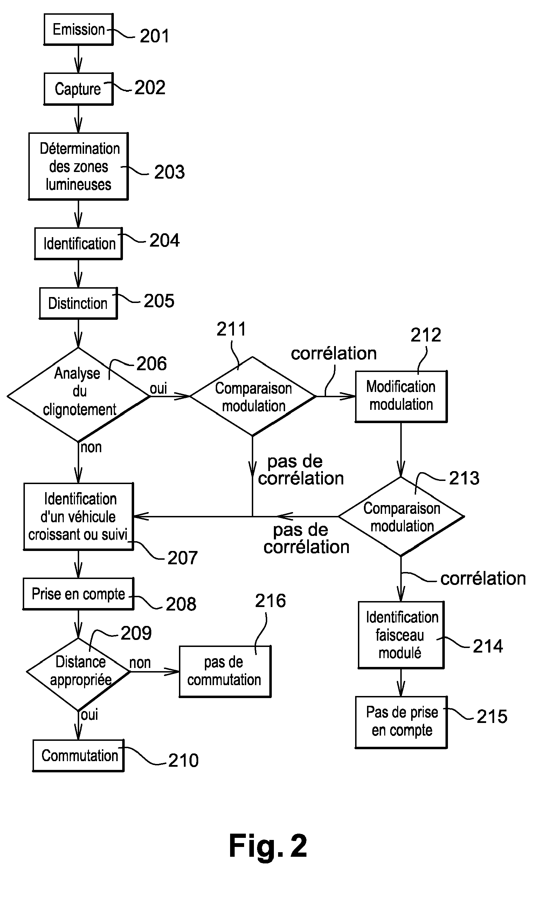

La figure 2 représente un organigramme décrivant un exemple de mise en oeuvre 200 du procédé de discrimination automatique selon l'invention. L'exemple 200 est appliqué, par exemple, au système 100, dans lequel le véhicule circule avec la fonction de route activée, présentant les caractéristiques qui viennent d'être mentionnées, ledit procédé comportant notamment les opérations suivantes :
- émission 201, des faisceaux lumineux 105A et/ou 105B modulés en fréquence ;
- capture 202, au moyen de la caméra 101 embarquée au sein du véhicule, des images relatives à la scène de route 106 se déroulant devant le véhicule ;
- détermination 203 d'un ensemble de zones lumineuses sur les images capturées ;
- identification 204, dans l'ensemble de zones lumineuses détectées, d'un premier sous-ensemble de zones lumineuses constitué des zones lumineuses créées par le faisceau lumineux pulsé.
- distinction 205, sur une première image capturée, d'un ensemble d'objets lumineux, chaque objet lumineux étant associé bijectivement à une zone lumineuse de l'ensemble de zones lumineuses déterminé ;
- analyse 206 de l'évolution de chaque objet lumineux sur une pluralité d'images successives consécutives à la première image, en détectant une éventuelle disparition de l'objet lumineux considéré ; deux issues sont alors possibles :
Première issue :
Si l'analyse 206 ne détecte pas de disparition de l'objet considéré, alors le procédé suit les opérations suivantes :
   - identification 207 comme zone lumineuse créée par un véhicule croisant ou suivi de chaque zone lumineuse de l'ensemble de zones lumineuses associée à un des objets lumineux dont une continuité a été déterminée dans l'opération d'analyse 206 ;
   - prise en compte 208 ; chaque identification 207 de véhicule adverse est retenue pour la décision de commutation du dispositif bifonctions ;
   - détermination de l'utilité de la commutation en fonction de la distance séparant le véhicule croisant ou suivi du véhicule considéré ; deux cas de figure sont alors possibles :

   - si le véhicule croisant ou suivi est suffisamment loin pour que son conducteur ne soit pas gêné, le procédé est fini pour les images considérées ; le dispositif projecteur bifonctions est maintenu en position route dans une étape 216.
   - si le véhicule croisant ou suivi est suffisamment proche pour son conducteur soit gêné, une commutation 210 du faisceau lumineux de type route 105a vers le faisceau lumineux de type code 105B est alors réalisée.
Deuxième issue :
Si l'analyse 206 détecte au moins une disparition de l'objet considéré, alors le procédé 200 suit les opérations suivantes :
   - comparaison 211 d'une fréquence de disparition des objets lumineux à la fréquence de pulsation de la source lumineuse pour établir, le cas échéant, un lien de cause à effet ; deux cas de figure sont alors possibles :
      - si les deux fréquences sont décorrélées, alors on établit un lien de cause à effet et on procède à l'étape d'identification 207 ;
      - si les deux fréquences sont corrélées, alors on procède à l'exécution des opérations supplémentaires suivantes :
         - modification 212 de la valeur de la fréquence de pulsation de la source lumineuse en adoptant une nouvelle valeur de fréquence de pulsation ;
         - comparaison 213 d'une fréquence de disparition des objets lumineux à la nouvelle fréquence de pulsation de la source lumineuse pour établir, le cas échéant, un nouveau lien de cause à effet ;
         - si aucun nouveau lien de cause à effet n'est observé, on procède à l'étape d'identification 207 ; les sources lumineuses analysées ne provenant assurément pas de la réflexion du faisceau lumineux pulsé ;
         - si un nouveau lien de cause à effet est observé on procède à l'identification 214 comme zone lumineuse créée par le faisceau pulsé de chaque zone lumineuse de l'ensemble de zones lumineuses associée à un des objets lumineux dont une disparition a été déterminée dans l'opération d'analyse pour laquelle le nouveau lien de cause à effet a été établi ; dans une étape 215, aucune prise en compte n'est alors réalisée, pour ces zones de lumière, dans la décision de commutation du dispositif projecteur bifonctions.

La pluralité d'images successives et consécutives, sur laquelle est analysée l'évolution de chaque objet lumineux, est avantageusement constituée d'un nombre maximal d'images égal à N+1, N étant le nombre entier immédiatement supérieur à la valeur de la fréquence de pulsation de la source lumineuse.

Le procédé selon l'invention permet donc de distinguer les véhicules croisés ou suivis des surfaces réfléchissantes; il permet la réduction du temps de calcul et, par conséquent, il permet d'utiliser un dispositif de traitement d'images présentant une taille minimale et un faible coût.

## Revendications

1. Procédé de discrimination automatique de zones lumineuses détectées par un dispositif d'aide à la conduite (100) embarqué au sein d'un véhicule, ledit procédé comportant notamment les étapes consistant à :
- capturer (202), au moyen d'une caméra (101) embarquée au sein du véhicule, des images relatives à une scène de route (106) se déroulant devant le véhicule ;
- déterminer (203) un ensemble de zones lumineuses sur les images capturées ;
**caractérisé en ce qu'**il comporte notamment les étapes supplémentaires consistant à :
- émettre (201), au moyen d'une source lumineuse du véhicule, un faisceau lumineux (105A) pulsé ;
- identifier (204), dans l'ensemble de zones lumineuses détectées, un premier sous-ensemble de zones lumineuses constitué des zones lumineuses créées par le faisceau lumineux pulsé, cette identification du premier sous-ensemble comportant les différentes opérations consistant à :
- distinguer (205), sur une première image capturée, un ensemble d'objets lumineux, chaque objet lumineux étant associé bijectivement à une zone lumineuse de l'ensemble de zones lumineuses déterminé ;
- analyser (206) l'évolution de chaque objet lumineux sur une pluralité d'images successives consécutives à la première image, en détectant une éventuelle disparition de l'objet lumineux considéré ;
- identifier (207) comme zone lumineuse créée par le faisceau pulsé chaque zone lumineuse de l'ensemble de zones lumineuses associée à un des objets lumineux dont une disparition a été détectée dans l'opération d'analyse

2. Procédé selon la revendication précédente **caractérisé en ce que** le faisceau lumineux pulsé correspond à un faisceau lumineux réalisant une fonction de type route.

3. Procédé selon la revendication 1 **caractérisé en ce que** le faisceau lumineux pulsé est un faisceau infrarouge.

4. Procédé selon l'une au moins des revendications précédentes **caractérisé en ce que** la caméra a une première fréquence d'acquisition, la fréquence de pulsation de la source lumineuse étant strictement inférieure à la fréquence d'acquisition de la caméra.

5. Procédé selon la revendication précédente **caractérisé en ce que** la fréquence de pulsation de la source lumineuse est un sous-multiple de la fréquence d'acquisition de la caméra.

6. Procédé selon l'une au moins des revendications précédentes, **caractérisé en ce que** la pluralité d'images successives et consécutives, sur laquelle est analysée l'évolution de chaque objet lumineux, est constituée d'un nombre maximal d'images égal à N+1, N étant le nombre entier immédiatement supérieur à la valeur de la fréquence de pulsation de la source lumineuse.

7. Procédé selon l'une au moins des revendications précédentes, **caractérisé en ce que**, préalablement à l'opération consistant à identifier comme zone lumineuse créée par le faisceau pulsé chaque zone lumineuse de l'ensemble de zones lumineuses associée à un des objets lumineux dont une disparition a été déterminée dans l'opération d'analyse, le procédé comporte les opérations supplémentaires consistant à :
- comparer (211) une fréquence de disparition des objets lumineux à la fréquence de pulsation de la source lumineuse pour établir, le cas échéant, un lien de cause à effet ;
- identifier comme zone lumineuse créée par le faisceau pulsé chaque zone lumineuse de l'ensemble de zones lumineuses associée à un des objets lumineux dont une disparition a été déterminée dans l'opération d'analyse uniquement si le lien de cause à effet a été établi.

8. Procédé selon la revendication précédente **caractérisé en ce que**, préalablement à l'opération consistant à identifier comme zone lumineuse créée par le faisceau pulsé chaque zone lumineuse de l'ensemble de zones lumineuses associée à un des objets lumineux dont une disparition a été déterminée dans l'opération d'analyse uniquement si le lien de cause à effet a été établi, le procédé comporte les opérations supplémentaires consistant à :
- modifier (212) la valeur de la fréquence de pulsation de la source lumineuse en adoptant une nouvelle valeur de fréquence de pulsation;
- comparer (213) une fréquence de disparition des objets lumineux à la nouvelle fréquence de pulsation de la source lumineuse pour établir, le cas échéant, un nouveau lien de cause à effet ;
- identifier (214) comme zone lumineuse créée par le faisceau pulsé chaque zone lumineuse de l'ensemble de zones lumineuses associée à un des objets lumineux dont une disparition a été déterminée dans l'opération d'analyse uniquement si le nouveau lien de cause à effet a été établi.

9. Dispositif d'aide à la conduite d'un véhicule apte à mettre en oeuvre le procédé selon l'une au moins des revendications précédentes, ledit dispositif comportant notamment :
- une caméra apte à capturer des images d'une scène de route se déroulant devant le véhicule ;
**caractérisé en ce qu'**il comporte notamment :
- une source lumineuse émettant un faisceau lumineux pulsé ;
- une unité de traitement d'images (102) pour discriminer, sur les images capturées, des zones lumineuses crées par la source lumineuse modulée en fréquence et des zones lumineuses non créées par la source lumineuse modulée en fréquence.

10. Dispositif selon la revendication précédente **caractérisé en ce qu'**il comporte :
- un dispositif projecteur bifonctions (104) apte à produire un faisceau lumineux de type route et un faisceau lumineux (105B) de type code ;
- un dispositif de pilotage (103) pour réaliser une commutation automatique du faisceau lumineux produit par le dispositif projecteur bifonctions indépendamment de la présence éventuelle des zones lumineuses créées par la source lumineuse modulée en fréquence.

11. Dispositif d'aide à la conduite selon l'une au moins des revendications 9 ou 10, **caractérisé en ce que** la source lumineuse contribue au moins partiellement à la production du faisceau lumineux de type route.

12. Dispositif d'aide à la conduite selon l'une au moins des revendications 9 à 11, **caractérisé en ce que** la fréquence de pulsation de la source lumineuse est inférieure strictement à la fréquence d'acquisition de la caméra.

13. Dispositif d'aide à la conduite selon l'une au moins des revendications 9 à 12 **caractérisé en ce que** la fréquence d'acquisition de la caméra est de trente Hertz, et **en ce que** la fréquence de pulsation de la source lumineuse est de quinze hertz.

14. Véhicule automobile **caractérisé en ce qu'**il comporte le dispositif d'aide à la conduite selon l'une au moins des revendications 9 à 13.
